**Europäisches Patentamt**

**European Patent Office**

**Office européen des brevets**

(19)

(11) Veröffentlichungsnummer: **0 240 657 B1**

(12) ## EUROPÄISCHE PATENTSCHRIFT

(45) Veröffentlichungstag der Patentschrift: **11.09.91**

(51) Int. Cl.⁵: **G08B 13/18**

(21) Anmeldenummer: **87101070.8**

(22) Anmeldetag: **27.01.87**

(54) **Verfahren zum Betreiben eines Bewegungsmelders.**

(30) Priorität: **24.03.86 DE 3609926**

(43) Veröffentlichungstag der Anmeldung:
**14.10.87 Patentblatt 87/42**

(45) Bekanntmachung des Hinweises auf die
Patenterteilung:
**11.09.91 Patentblatt 91/37**

(84) Benannte Vertragsstaaten:
**AT BE CH DE ES FR GB IT LI LU NL**

(56) Entgegenhaltungen:
**EP-A- 0 005 352**
**DE-B- 2 659 470**
**DE-U- 8 609 515**

(73) Patentinhaber: **Fritz Fuss GmbH & Co.**
**Johannes-Mauthe-Strasse 14**
**W-7470 Albstadt 1(DE)**

(72) Erfinder: **Merkel, Willi, Dr. jur.**
**Leibnizstrasse 54**
**W-7470 Albstadt-Ebingen(DE)**
Erfinder: **Willie, Joachim-Horst-Rudolf**
**Im Grund 13**
**W-7475 Messstetten - 1(DE)**
Erfinder: **Haack, Dieter-Gerhard**
**Sonnestrasse 14**
**W-7472 Winterlingen(DE)**

(74) Vertreter: **Weber, Otto Ernst, Dipl.-Phys. et al**
**Hofbrunnstrasse 36**
**W-8000 München 71(DE)**

## Beschreibung

Die Erfindung betrifft ein Verfahren zum Betreiben eines Bewegungsmelders, der eine vorgegebene Reichweite aufweist und der zwischen einem Scharf- und einem Unscharf-Zustand umgeschaltet werden kann, mit einem Sensor, mit einer nachgeschalteten Signalverarbeitungseinheit, mit einer Auswerteeinheit und mit einer Meldelinie zur Verbindung mit einer Meldezentrale.

In der Gefahrenmeldetechnik, insbesondere in der Intrusionsschutztechnik, werden Bewegungsmelder zur Erfassung von bewegten Objekten eingesetzt. Die Bewegungsmelder sind mit einem Sensor versehen, der eine vorgegebene Reichweite aufweist, die den zu überwachenden Bereich bestimmt. Es können sowohl Innenräume als auch Außenflächen auf die Bewegung von Personen und Kraftfahrzeugen hin überwacht werden.

Zur Realisierung der Sensoren macht man sich unterschiedliche physikalische Prinzipien zunutze. So sind beispielsweise Ultraschallbewegungsmelder bekannt, die auf dem Dopplereffekt beruhen. Bei dieser Art von Bewegungsmeldern wird eine vorgegebene Frequenz im Ultraschallwellenbereich ausgesendet und die reflektierten Wellen empfangen. Die Empfangsfrequenz weicht zwangsläufig stets dann von der Sendefrequenz ab, wenn Menschen in die Wirkzone eindringen oder Gegenstände ihre Lage nicht beibehalten. Ist die Empfangsfrequenz nicht gleich der Sendefrequenz, so wird ein Alarm ausgelöst.

Zur Raum-Strecken- oder Objektsicherung in geschlossenen Räumen ist auch der Einsatz eines Infrarot-Sensors bekannt. Dabei wird die vom menschlichen Körper oder von einer anderen Wärmequelle abgegebene IR-Strahlung von einer Spiegeloptik einem Pyroelement gebündelt zugeführt und die von diesem Detektor abgegebene Signalspannung frequenzabhängig verarbeitet. Auf diese Weise können auch kleinste Strahlenflußänderungen, d.h. eine zeitliche Änderung der Temperaturdifferenz zwischen der Umgebungstemperatur und der jeweiligen Oberflächentemperatur des zu überwachenden Objekts bzw. Eindringlings, detektiert werden.

Unabhängig vom physikalischen Effekt sowie von der verwendeten Technologie haben die bekannten Bewegungsmelder eine wesentliche Eigenschaft gemeinsam. Sie sind darauf ausgerichtet, ausschließlich dynamische Änderungen zu erfassen und auszuwerten.

Für die zu sichernden Räume muß jedoch auch die Möglichkeit gegeben sein, daß sie zu bestimmten Zeiten oder von bestimmten Personen betreten werden können, ohne daß zwangsläufig die Alarmmeldung ausgelöst wird. Deshalb erfolgt eine Weiterleitung oder eine Auswertung einer dynamischen Änderung als Alarmmeldung nur dann, wenn der Bewegungsmelder oder eine zentrale Meldeanlage in einen "scharfen" Zustand geschaltet ist. In diesem Fall wird jede entsprechende Änderung im überwachten Bereich erfaßt und führt zu einer Meldung. In einem anderen "unscharfen" Zustand detektiert der Bewegungsmelder zwar ebenfalls die dynamischen Änderungen, eine Alarmmeldung wird jedoch unterdrückt oder verhindert. Dieser Zustand besteht beispielsweise, wenn in einer Bankschalterhalle während der üblichen Schalterstunden Publikumsverkehr herrscht oder wenn an einem zu überwachenden Zugang eines Industriebetriebes Lieferungen erfolgen.

Während der Zeitdauer, in welcher ein Bewegungsmelder oder die Meldezentrale unscharf geschaltet sind, besteht die Gefahr, daß der Bewegungsmelder sabotiert wird. Im Fall eines Ultraschallmelders kann dies beispielsweise durch Abdecken des Sensors mit einer Blende, einem Hut oder einem Pappdeckel erfolgen. Ein Infrarotmelder ist in diesem Zustand beispielsweise durch Besprühen mit einem Farbspray außer Funktion zu setzen.

Die Bewegungsmelder erkennen zwar diese dynamische Veränderung während der Zeitdauer des Sabotageangriffs. Eine Auswertung oder eine Aktivierung einer Meldelinie erfolgt im unscharfen Zustand jedoch nicht. Da sich die Blende nunmehr statisch vor dem Sensor befindet, kann der Melder auch nach dem Einschalten in den Scharfzustand weder die Blende noch eine Bewegung im zu überwachenden Raum erkennen. Eine ordnungsgemäße Funktion des Bewegungsmelders ist also nicht mehr gewährleistet. Das Umschalten in den Scharfzustand wird deshalb nicht verhindert, weil die Zwangsläufigkeit, daß keine Meldelinie aktiviert ist, erfüllt ist.

Der Erfindung liegt die **Aufgabe** zugrunde, einen Bewegungsmelder der eingangs genannten Art anzugeben, der von einer unberechtigten Person während des Unscharfzustandes nicht außer Funktion gesetzt werden kann.

Eine ähnliche Aufgabe, mit einer anderen Lösung, ist aus der DE-A-2 659 470 bekannt.

Diese Aufgabe wird dadurch gelöst, daß beim Einschalten des Unscharfzustandes die wirksame Reichweite auf die unmittelbare Umgebung des Bewegungsmelders eingeschränkt wird, daß die Funktion des Bewegungsmelders im übrigen aufrechterhalten wird und daß bei einer Bewegungsmeldung eine Meldelinie aktiviert wird.

Die Funktion der Erfindung beruht also darauf, während der Zeitdauer, in welcher die Meldeanlage unscharf geschaltet ist, den Erfassungsbereich bzw. die Reichweite des Bewegungsmelders soweit zu reduzieren, daß sich zwar einerseits Personen in dem ansonsten zu überwachenden Raum frei bewegen können, daß aber andererseits jede Annäherung in die unmittelbare Umgebung des Bewegungsmelders detektiert und als Sabotageangriff erfaßt und gemeldet wird. Dabei erfolgt sowohl die Erfassung als auch die Auswertung einer Annäherung oder Veränderung innerhalb des Bewegungsmelders.

In der praktischen Anwendung hat sich eine Einschränkung der Reichweite auf 40 cm bewährt.

Eine bevorzugte Ausbildung der Erfindung besteht darin, daß zur Reichweitenumstellung die Empfindlichkeit der nachgeschalteten Verarbeitungseinheit verändert wird. Das hat den Vorteil, daß die Reichweitenumstellung durch reine schaltungstechnische Maßnahmen erfolgen kann.

Eine bevorzugte Ausgestaltung der Erfindung besteht darin, daß das Meldesignal über eine separate Leitung weitergeleitet wird. Auf diese Weise ist es möglich, unabhängig von der Scharf- oder Unscharfschaltung der sonstigen Meldelinien eine Manipulation am Bewegungsmelder akustisch und/oder optisch in der Meldezentrale oder an einer anderen Kontrollstelle ohne Zeitverzug anzuzeigen.

Eine alternative Weiterbildung der Erfindung besteht darin, daß das Meldesignal bis zur Einschaltung des Scharfzustandes im Bewegungsmelder zwischengespeichert wird und anschließend auf die Meldelinie ausgegeben wird. Auf diese Weise wird bei Scharfstellen der Überwachungseinrichtung sofort ein Alarm auf der Meldelinie ausgelöst. Das hat den Vorteil, daß die Sabotage am Bewegungsmelder sofort entdeckt wird und behoben werden kann. Somit wird verhindert, daß in einer an sich nicht funktionsfähigen Meldeanlage eine Funktionsfähigkeit vorgetäuscht wird.

Eine bevorzugte Weiterbildung der Erfindung besteht darin, daß beim Auslösen eines Alarms im Unscharfzustand ein optischer und/oder ein akustischer Melder am Bewegungsmelder aktiviert wird. Durch diese Anzeige kann der außer Funktion gesetzte Bewegungsmelder bei einem Kontrollgang sehr schnell identifiziert werden.

Im folgenden wird die Erfindung anhand von zwei in Figuren dargestellten Ausführungsbeispielen weiter beschrieben.

Figur 1    zeigt schematisch eine Strahlencharakteristik eines passiven Infrarot-Bewegungsmelders im Scharf-Zustand.

Figur 2    Zeigt schematisch eine Strahlencharakteristik des Infrarot-Bewegungsmelders im Unscharf-Zustand.

Figur 3    Zeigt ein Blockschaltbild eines Bewegungsmelders.

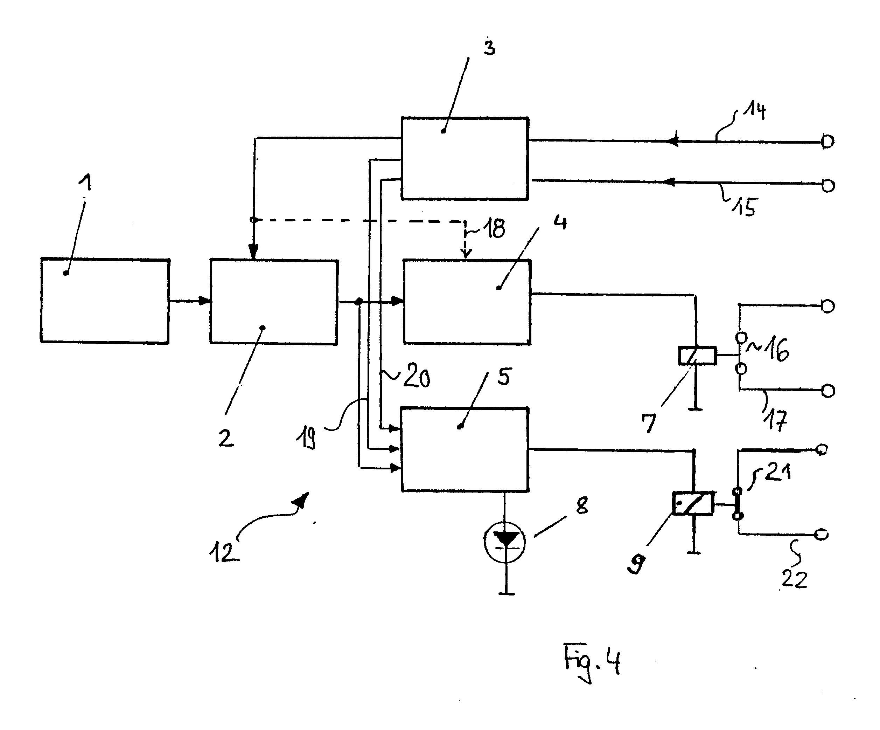

Figur 4    Zeigt ein Blockschaltbild eines weiteren Bewegungsmelders.

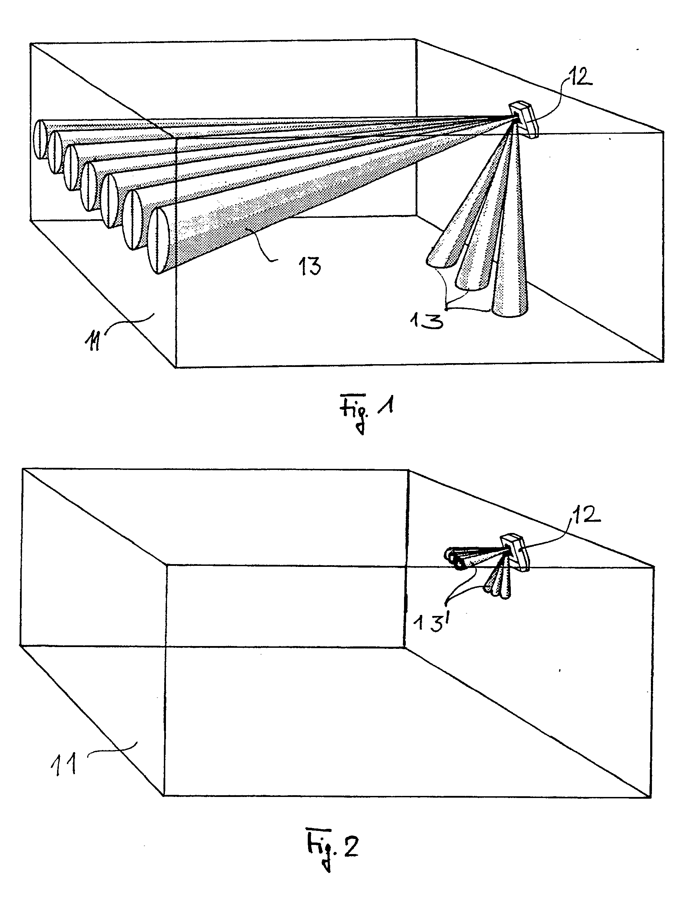

Die Fig.1 veranschaulicht in einer perspektivischen Wiedergabe einen quaderförmigen Raum 11 mit einem Bewegungsmelder 12. Dieser ist in dem hier gezeigten Beispiel unterhalb der Raumdecke an einer Raumwand mit einer leichten Neigung nach unten angebracht. Der hier gezeigte Bewegungsmelder 12 weist ein aktives Gesichtsfeld 13 aus zehn in den Raum gerichteten kegelförmigen Überwachungszonen auf. Sieben dieser Überwachungszonen erstrecken sich bis zur gegenüberliegenden Raumwand. Sie sind in der Weise in der horizontalen Ebene aufgefächert, daß die gesamte Breite dieser Raumwand erfaßt wird. Die übrigen drei Kegel sind unter einer leichten Auffächerung steil auf den unterhalb des Bewegungsmelders 12 liegendenden Bereich des Raumes 11 gerichtet.

Gelangt ein Objekt in den Strahlengang des Bewegungsmelders 12, so wird jede Bewegung detektiert. Als Sensor dient in dem hier vorliegenden Fall eines passiven Infrarotmelders ein Pyroelement. Die von einem menschlichen Körper abgegebene infrarote Strahlung wird von einer Spiegeloptik gebündelt, wobei die in der Figur 1 wiedergegebene Strahlencharakteristik entsteht. Bewegt sich ein Mensch innerhalb der zehn gezeigten kegelförmigen Überwachungszonen, so genügt die kleinste Strahlenflußänderung, beispielsweise o,2 $^{\circ}$/sec, um eine Registrierung durch den Bewegungsmelder 12 zu veranlassen. Das Gesichtsfeld 13 wird selbstverständlich so ausgerichtet, daß ein Unterlaufen oder Umgehen nicht möglich ist, obwohl die Ausrichtung des Gesichtsfeldes des Bewegungsmelders 12 optisch ohnehin nicht erkennbar ist.

Selbstverständlich kann anstelle eines Infrarotbewegungsmelders auch ein Bewegungsmelder installiert sein, der auf einem anderen physikalischen Prinzip beruht, beispielsweise ein Ultraschall-Bewegungsmelder.

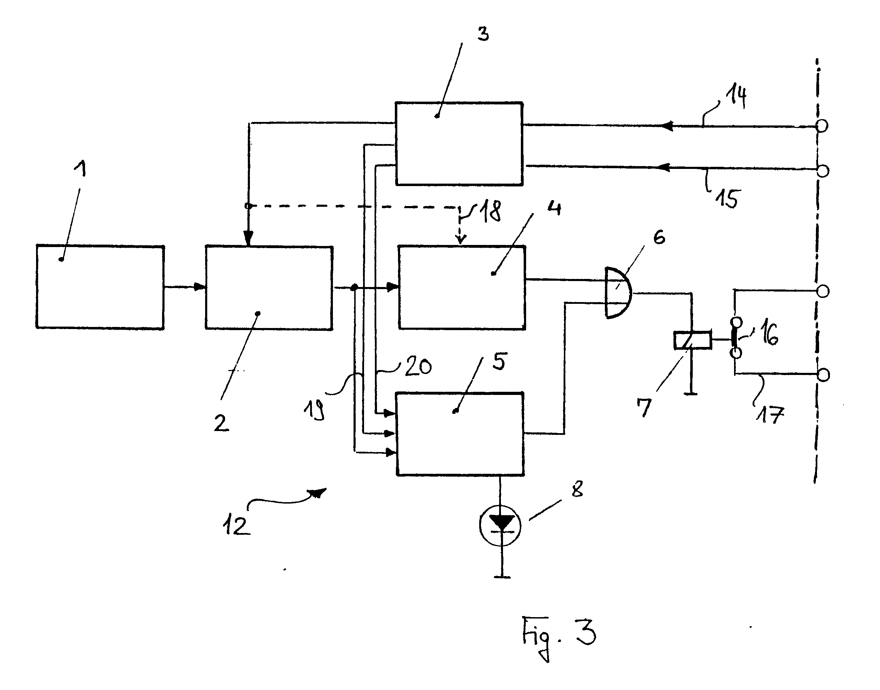

In Fig.2 ist der Bewegungsmelder 12 aus dem Scharfzustand, der in Fig. 1 veranschaulicht ist, in einen Unscharfzustand geschaltet. Dies hat, wie die Fig.2 deutlich zeigt, zur Folge, daß die Reichweite des Bewegungsmelders 12 stark eingeschränkt ist. Die Reichweite des Bewegungsmelders, die, abhängig von seinem physikalischen Prinzip, beispielsweise zwischen 7 m und 30 m liegen kann, ist hierbei wesentlich reduziert. Wenn man von einer üblichen Raumhöhe von etwa 2,50 m ausgeht, liegt die Reichweite des reduzierten Gesichtsfeldes 13' bei etwa 40 cm. Auf diese Weise können sich Personen innerhalb des gesamten Raumes 11 bewegen, ohne daß sie in das reduzierte wirksame Gesichtsfeld 13' gelangen. Versucht jedoch eine Person, sich dem Bewegungsmelder 12 weiter, d.h. über den zulässigen Bereich hinaus, zu nähern, so gelangt sie in das reduzierte Gesichtsfeld 13' und die Bewegung wird detektiert. Ein Eindringen in das reduzierte Gesichtsfeld 13' könnte beispielsweise dann geschehen, wenn versucht wird, den Sensor des Bewegungsmelders 12 in Sabotageabsicht zu neutralisieren. Zu diesem Zweck könnte beispielsweise eine Blende vor dem Sensor aufgestellt oder der Sensor mit einer Farbschicht überzogen werden.

Obwohl sich der Bewegungsmelder 12 im Unscharfzustand befindet, wird eine derartige Maßnahme bekannt und ausgewertet. Spätestens beim Wiedereinschalten des Scharfzustandes könnte daher festgestellt werden, daß der Bewegungsmelder 12 nicht funktionsfähig ist. Dies soll im folgenden anhand der Blockschaltbilder im einzelnen beschrieben werden.

Gemäß Fig.3 wird das Ausgangssignal eines Sensors 1 des Bewegungsmelders 12 einer Signalvorverstärkungs- und Signalverarbeitungseinheit 2 zugeführt. Diese wird von einer Steuerlogik 3 angesteuert, die ihre Eingangssignale über eine Steuerleitung 14 und ein Rückstellsignal über eine Rücksetzleitung 15 erhält. Die Signalvorverstärkungs- und Signalverarbeitungseinheit 2 liegt ausgangsseitig an einer ersten und einer zweiten Auswerteeinheit 4,5, die beide über ein ODER-Glied 6 mit dem Steuereingang einer Schaltstufe 7 verbunden sind. Diese schaltet eine Meldelinie 17, die zu einer Meldezentrale (nicht dargestellt) führt.

Wenn über die Steuerleitung 14 ein Signal an die Steuerlogik 3 zur Einschaltung des Scharfzustandes gelangt, beispielsweise indem der Leitungspegel auf der Steuerleitung 14 einen Wert für log. 1 annimmt,wird der Verstärkungsfaktor der Signalvorverstärkungs- und Signalverarbeitungseinheit 2 so eingestellt, daß das wirksame Gesichtsfeld 13 des Bewegungsmelders 12 möglichst groß ist und den gesamten zu überwachenden Raum gemäß Fig.1 überstreicht. Das auf diese Weise verstärkte Ausgangssignal des Sensors 1 gelangt an einen Komparator in der ersten Auswerteeinheit 4. Überschreitet dessen Eingangsspannung die vorgegebene Schaltschwelle, so nimmt dessen Ausgangssignal einen log.1-Pegel an, der über das ODER-Glied 6 die als Relais ausgebildete Schaltstufe 7 aktiviert. Das Relais zieht an und ein Schalter 16 in der Meldelinie 17 öffnet, wobei die Meldelinie 17 kurzzeitig unterbrochen wird. Dabei erfolgt in der Meldezentrale eine Alarmmeldung.

Das Ausgangssignal der ersten Auswerteeinheit 4 steht jeweils nur kurzzeitig an. Seine Dauer kann beispielsweise durch eine monostabile Kippstufe auf etwa 5 Sekunden festgelegt werden. Jede erneute Bewegung im wirksamen Gesichtsfeld 13 löst eine weitere kurzzeitige Aktivierung der Schaltstufe 7 aus. Eine Speicherung erfolgt - in diesem Beispiel -nicht. Die Alarmmeldung wird lediglich in der Meldezentrale gespeichert.

Wird über die Steuerleitung 14 in den Unscharfzustand umgeschaltet, beispielsweise durch einen log.0-Signalpegel, so wird der Verstärkungsfaktor der Signalvorverstärkungs- und Signalverarbeitungseinheit 2 über die Steuerlogik 3 in ein oder mehreren Stufen verringert. Diese Verringerung der Ansprechempfindlichkeit der Einheit 2 hat zur Folge, daß das wirksame Gesichtsfeld 13' des Bewegungsmelders 12 in der anhand der Fig.2 beschriebenen Weise reduziert wird. An der Signalvorverstärkungs- und Signalverarbeitungseinheit 2 ist daher ausgangsseitig nur dann ein Meldesignal abgreifbar, wenn eine Bewegung innerhalb des reduzierten Gesichtsfeldes 13' erfolgt. Erfolgt daher im vorgegebenen Nahbereich eine Bewegung, so gelangt ein entsprechendes Signal in die zweite Auswerteeinheit 5, wo es digitalisiert, zwischengespeichert, und über das ODER-Glied 6 an die Schaltstufe 7 weitergeleitet wird. Dieses Signal, das beispielsweise einen log.1-Pegel annimmt, steht statisch solange am Ausgang der zweiten Auswerteeinheit 5 an, bis eine manuelle Rückstellung der Schaltstufe 7 durch eine Bedienperson erfolgt. Solange die Schaltstufe 7 jedoch aktiviert ist, ist die Meldelinie 17 unterbrochen. Dies hat zur Folge, daß ein Umschalten in den Scharfzustand über die Steuerleitung 14 nicht möglich ist, da die Meldeleitung 17 über die Meldezentrale vor dem Einschalten des Scharfzustandes auf eine Unterbrechung überwacht wird. Ist die Meldelinie 17 unterbrochen, so wird eine Scharfschaltung verhindert. Die Aktivierung des Bewegungsmelders 12 im Unscharfzustand wird über eine optische Anzeige 8, die beispielhaft als LED-Diode dargestellt ist, angezeigt, um bei einem Kontrollgang durch eine Bedienperson den angesprochenen Bewegungsmelder 12 optisch zu identifizieren. Alternativ zu der Empfindlichkeitsumschaltung der Signalvorverstärkungs- und Signalverarbeitungseinheit 2, wie sie oben beschrieben wurde, ist es auch möglich, das Ausgangssignal der Signalvorverstärkungs- und Signalverarbeitungseinheit 2 bei einem gegenüber dem Scharfzustand unveränderten Verstärkungsfaktor der ersten Auswerteeinheit 4 zuzuführen, die in diesem Fall jedoch einen Komparator aufweisen muß, dessen Ansprechschwelle in Stufen verändert werden kann. Der Komparator wird dabei über die Steuerleitung 18 von der Steuerlogik 3 angesteuert. Eine Verbindung der Steuerlogik 3 zur Einheit 2 ist dabei entbehrlich. Ferner muß bei dieser Variante das Ausgangssignal der ersten Auswerteeinheit 4 sinngemäß in der oben beschriebenen Weise auf den Eingang der zweiten Auswerteeinheit 5 gelegt werden, um eine Zwischenspeicherung sicherzustellen.

Über Leitung 19, von der Steuerlogik 3 zur zweiten Auswerteeinheit 4 ist der Zwischenspeicher beim Umschalten vom Scharfzustand in den Unscharfzustand aktivierbar. Über Leitung 20 wird der Zwischenspeicher zurückgesetzt.

Bei der im folgenden beschriebenen Fig.,4 sind für gleiche Teile gleiche Bezugzeichen verwendet worden, so daß zur Erläuterung der entsprechenden Einzelheiten auf die Fig.3 verwiesen werden kann.

Der wesentliche Unterschied zu der Anordnung nach Figur 3 besteht darin,daß das Ausgangssignal der zweiten Auswerteeinheit 5 nicht über das ODER-Glied 6 an die Schaltstufe 7 geführt wird. Vielmehr gelangt das Ausgangssignal der zweiten Auswerteeinheit 5 unmittelbar an eine weitere Schaltstufe 9, die ebenfalls als Relais ausgebildet sein kann. Die weitere Schaltstufe 9 steuert einen weiteren Schalter 21, der in einer weiteren, von der Meldelinie 17 separaten Meldelinie 22 liegt. Der potentialfreie Kontakt der weiteren Schaltstufe 9 ist in die weitere Meldelinie 22 eingeschleift. Diese separate Ausgangsstufe bietet die Möglichkeit, unabhängig von der Meldelinie 17 im Unscharfzustand eine akustische und/oder optische Signalisierung in der Meldezentrale zu ermöglichen. Diese Information kann beispielsweise dazu benutzt werden, eine Bedienperson unmittelbar über einen Manipulationsversuch am Bewegungsmelder 12 zu informieren. Sowohl an der Meldelinie 17 als auch an der weiteren Meldelinie 22 können mehrere Bewegungsmelder 12 angeschlossen sein.

**Patentansprüche**

1. Verfahren zum Betreiben eines Bewegungsmelders, der eine vorgegebene Reichweite aufweist und der zwischen einem Scharf- und einem Unscharfzustand umgeschaltet werden kann, mit einem Sensor, einer nachgeschalteten Signalverarbeitungseinheit, mit einer Auswerteeinheit und mit einer Meldelinie zur Verbindung mit einer Meldezentrale, dadurch **gekennzeichnet,** daß beim Einschalten des Unscharfzustandes die wirksame Reichweite auf die unmittelbare Umgebung des Bewegungsmelders (12) eingeschränkt wird, daß die Funktion des Bewegungsmelders (12) im übrigen aufrechterhalten wird und daß bei einer Bewegungsmeldung eine Meldelinie (17,22) aktiviert wird.

2. Verfahren nach Anspruch 1, dadurch **gekennzeichnet,** daß die Reichweite auf 40 cm eingeschränkt wird.

3. Verfahren nach Anspruch 1 oder 2, dadurch **gekennzeichnet,** daß zur Reichweitenumstellung die Empfindlichkeit der nachgeschalteten Verarbeitungseinheit verändert wird.

4. Verfahren nach einem der vorhergehenden Ansprüche, dadurch **gekennzeichnet,** daß das Meldesignal über eine separate Leitung weitergeleitet wird.

5. Verfahren nach einem der Ansprüche 1 bis 3, dadurch **gekennzeichnet,** daß das Meldesignal bis zur Einschaltung des Scharfzustandes im Bewegungsmelder (12) zwischengespeichert und anschließend auf die Meldelinie (17,22) ausgegeben wird.

6. Verfahren nach einem der vorhergehenden Ansprüche, dadurch **gekennzeichnet,** daß beim Auslösen eines Alarms im Unscharfzustand ein optischer und/oder ein akustischer Melder am Bewegungsmelder (12) aktiviert wird.

**Claims**

1. Method for operating a movement indicator, which has a predetermined range and which can be switched between a sharp and an unsharp state, with a sensor, a downstream-connected signal processing unit, an evaluation unit and an indicating line for connection to an indication control room, characterized in that on switching into the unsharp state the effective range is limited to the immediate vicinity of the movement indicator (12), that the function of the movement indicator (12) is otherwise maintained and that in the case of a movement indication an indicating line (17, 22) is activated.

2. Method according to claim 1, characterized in that the range is limited to 40 cm.

3. Method according to claims 1 or 2, characterized in that the sensitivity of the downstream-connected processing unit is modified for changing the range.

4. Method according to one of the preceding claims, characterized in that the indicating signal is transmitted via a separate line.

5. Method according to one of the claims 1 to 3, characterized in that the indicating signal is buffer stored until the switching on of the sharp state in the movement indicator (12) and is then outputted on the indicating line (17, 22).

6. Method according to one of the preceding claims, characterized in that on triggering an alarm in the unsharp state, an optical and/or an acoustic indicator on the movement indicator (12) is activated.

**Revendications**

1. Procédé de mise en oeuvre d'un indicateur de mouvement ayant une portée prédéterminée et susceptible de commuter entre un état armé et un état non armé, comportant un capteur suivi d'une unité de traitement de signaux, une unité d'exploitation et une ligne de liaison reliée à une centrale de signalisation,
procédé caractérisé en ce que :
lors de la commutation à l'état non armé, la portée efficace est limitée à l'environnement direct de l'indicateur de mouvement (12) et le fonctionnement de cet indicateur de mouvement (12) reste conservé et en cas de détection de mouvement, une ligne de liaison (17, 22) est activée.

2. Procédé selon la revendication 1, caractérisé en ce que la portée est limitée à 40 cm.

3. Procédé selon la revendication 1 ou 2, caractérisé en ce que, pour commuter la portée, on modifie la sensibilité de l'unité de traitement en aval.

4. Procédé selon l'une des revendications précédentes, caractérisé en ce que le signal d'état est transmis par une ligne distincte.

5. Procédé selon l'une des revendications 1 à 3, caractérisé en ce que le signal d'état est mis en mémoire de façon intermédiaire, dans l'indicateur de mouvement (12) jusqu'à ce que celui-ci passe à l'état armé puis ce signal est émis par la ligne de liaison (17, 22).

6. Procédé selon l'une des revendications précédentes, caractérisé en ce que, lors du déclenchement d'une alarme à l'état non armé, on active un dispositif avertisseur optique et/ou accoustique de l'indicateur de mouvement.

Fig. 1

Fig. 2

Fig. 3

Fig.4

EP 0 240 657 B1